# EUROPÄISCHE PATENTANMELDUNG

(11) **EP 4 636 662 A1**
(43) Veröffentlichungstag der Anmeldung: **22.10.2025**
(21) Anmeldenummer: 24170256.2
(22) Anmeldetag: 15.04.2024
(51) Int. Cl.: G06N 20/00

(54) **VERFAHREN ZUM TRAINIEREN EINES GAMS**

(71) Anmelder: Robert Bosch GmbH, 70442 Stuttgart (DE)
(72) Erfinder: Schmidt, Eric Sebastian, 71296 Heimsheim (DE); Lindt, Stefan Patrick, 76275 Ettlingen (DE); Haug, Johannes, 72108 Rottenburg (DE)

(57) **Zusammenfassung**

Die Erfindung betrifft ein Verfahren und eine Vorrichtung (100) zum Trainieren eines verallgemeinerten, additiven Models, GAMs, zum Erkennen von fehlerhaften Proben in einer Fertigungsumgebung und zum Trainieren eines Fehlertyp-Clustering-Models auf Basis der fehlerhaften Proben. Ferner betrifft die Erfindung ein Verfahren zum Erkennen von fehlerhaften Proben in einer Fertigungsumgebung und/oder zum Clustern der als fehlerhaft erkannten Proben in mehrere Fehlertyp-Klassen.

## Beschreibung

Die Erfindung betrifft ein Verfahren und eine Vorrichtung zum Trainieren eines verallgemeinerten, additiven Models, GAMs, zum Erkennen von fehlerhaften Proben in einer Fertigungsumgebung und zum Trainieren eines Fehlertyp-Clustering-Models auf Basis der fehlerhaften Proben. Ferner betrifft die Erfindung ein Verfahren zum Erkennen von fehlerhaften Proben in einer Fertigungsumgebung und/oder zum Clustern der als fehlerhaft erkannten Proben in mehrere Fehlertyp-Klassen.

### Stand der Technik

In der Fertigungsindustrie ist die Qualitätssicherung von Bedeutung für die Aufrechterhaltung der Wettbewerbsfähigkeit und die Minimierung von Verlusten durch fehlerhafte Produkte. Ein gängiges Verfahren zur Überwachung der Produktqualität ist die Klassifizierung jedes gefertigten Teils als "OK" (in Ordnung) oder "NOK" (nicht in Ordnung), basierend auf einer Reihe von Qualitätsprüfungen. Obwohl dieses System bereits effektiv zwischen akzeptablen und fehlerhaften Teilen unterscheidet, liefert es keine tieferen Einblicke in die spezifischen Ursachen und/oder Typen von Fehlern, die zu einem NOK-Label führen. Die Fähigkeit, diese NOKs genauer zu analysieren und zu verstehen, könnte entscheidende Verbesserungen in der Produktionslinie ermöglichen, die Anzahl der fehlerhaften Teile reduzieren und somit Kosten sparen sowie die Gesamtqualität verbessern.

Die Herausforderung besteht darin, die fehlerhaften Teile nicht nur zu identifizieren, sondern auch zu verstehen, welche spezifischen Mängel vorliegen, insbesondere wenn keine vordefinierten Fehlerkategorien existieren. Hier bieten sich analytische Ansätze an: der unüberwachte Ansatz, wie zum Beispiel Clustering-Verfahren, die es ermöglichen, ohne vorherige Kennzeichnung der Daten Muster oder Gruppen innerhalb der NOK-Teile zu entdecken, und der Ansatz der manuellen Kennzeichnung nach Fehlertypen, der eine detaillierte Analyse auf Basis spezifischer Fehlerarten erlaubt.

Um die Entscheidungsprozesse hinter diesen Analysen transparent und nachvollziehbar zu gestalten, kommen sogenannte Glasbox-Modelle zum Einsatz. Diese ermöglichen es, die Logik hinter den Entscheidungen des Modells zu verstehen und zu interpretieren, wie jedes Eingangsmerkmal zu einer bestimmten Entscheidung beiträgt.

Ein beliebtes Werkzeug in diesem Kontext sind die verallgemeinerten additiven Modelle (GAMs), insbesondere die Explainable Boosting Machine (EBM). Diese Modelle bieten einen Mechanismus, um die Beziehung zwischen den Eingangsmerkmalen und der Zielvariablen transparent zu machen, indem sie die Zielvariable als eine Summe von unabhängigen Beiträgen der Eingangsmerkmale modellieren.

Der Ausdruck *E*[*Y*|*X*] = *β* + *f*₁(*X*₁) + ··· + *f*ₙ(*X*ₙ) veranschaulicht, wie jede Funktion *f*ᵢ ausschließlich von einem einzelnen Merkmal abhängt und wie diese Funktionen zusammenwirken, um die Zielvariable Y zu erklären. Dieser Ansatz ermöglicht nicht nur eine Analyse und Klassifikation von fehlerhaften Teilen, sondern auch eine tiefgreifende Einsicht in die Ursachen von Fehlern, was letztendlich zu effektiveren und zielgerichteten Verbesserungen in der Produktion führen kann.

Auch wenn bereits mehrere Ansätze zur Qualitätssicherung bekannt sind, ist weiterhin Entwicklungspotenzial gegeben, insbesondere um einen Ausschuss von Bauteilen (die fehlerhafterweise als NOK klassifiziert wurden) weiter zu minimieren.

Es ist eine Aufgabe der Erfindung, ein dahingehend verbessertes Verfahren und/oder eine verbesserte Vorrichtung anzugeben.

Die Aufgabe wird gelöst durch ein Verfahren gemäß den Merkmalen des Patentanspruchs 1. Die Aufgabe wird gelöst durch ein Verfahren gemäß den Merkmalen des Patentanspruchs 6. Die Aufgabe wird gelöst durch eine Vorrichtung gemäß den Merkmalen des Patentanspruchs 10.

### Offenbarung der Erfindung

Gemäß einem ersten Aspekt wird vorgeschlagen, ein Verfahren zum Trainieren eines verallgemeinerten, additiven Models, GAMs, zum Erkennen von fehlerhaften Proben in einer Fertigungsumgebung und zum Trainieren eines Fehlertyp-Clustering-Models auf Basis der fehlerhaften Proben,
das Verfahren aufweisend die Schritte:
- Bereitstellen eines, insbesondere tabellarischen, Datensatzes, aufweisend mehrere Proben, denen jeweils mehrere Probenmerkmale zugewiesen sind;
- Trainieren des GAMs, insbesondere einer Explainable Boosting Machine, zum Erkennen der fehlerhaften Proben in dem Datensatz auf Basis von mindestens einem der mehreren Probenmerkmale;
- Extrainieren von jeweiligen Einbettungsvektoren zumindest für die als fehlerhaft erkannten Proben, die Einbettungsvektoren vorzugsweise jeweils aufweisend die der jeweiligen fehlerhaft erkannten Probe zugeordneten Probenmerkmale;
- Trainieren des, insbesondere unüberwacht lernenden, Fehlertyp-Clustering-Models auf Basis der extrahierten Einbettungsvektoren zum Clustern der als fehlerhaft erkannten Proben in mehrere Fehlertyp-Klassen; und
- Bereitstellen des trainierten GAMs und/oder des trainierten Fehlertyp-Clustering-Models.

Es versteht sich, dass die erfindungsmäßen Schritte sowie weitere optionale Schritte nicht notwendigerweise in der aufgezeigten Reihenfolge ausgeführt werden müssen, sondern auch in einer anderen Reihenfolge ausgeführt werden können. Ferner können weitere Zwischenschritte vorgesehen sein. Die einzelnen Schritte können zudem einen oder mehrere Unterschritte umfassen, ohne dass hierdurch der Umfang des erfindungsgemäßen Verfahrens verlassen wird.

Gemäß einem zweiten Aspekt wird vorgeschlagen, eine Vorrichtung zum Trainieren eines verallgemeinerten, additiven Models, GAMs, zum Erkennen von fehlerhaften Proben in einer Fertigungsumgebung und zum Trainieren eines Fehlertyp-Clustering-Models auf Basis der fehlerhaften Proben, wobei die Vorrichtung (100) eine Auswerte- und Recheneinrichtung aufweist, die dazu ausgebildet ist, die folgenden Schritte auszuführen:
- Bereitstellen eines, insbesondere tabellarischen, Datensatzes, aufweisend mehrere Proben, denen jeweils mehrere Probenmerkmale zugewiesen sind;
- Trainieren des GAMs, insbesondere einer Explainable Boosting Machine, zum Erkennen der fehlerhaften Proben in dem Datensatz auf Basis von mindestens einem der mehreren Probenmerkmale;
- Extrainieren von jeweiligen Einbettungsvektoren zumindest für die als fehlerhaft erkannten Proben, die Einbettungsvektoren vorzugsweise jeweils aufweisend die der jeweiligen fehlerhaft erkannten Probe zugeordneten Probenmerkmale;
- Trainieren des, insbesondere unüberwacht lernenden, Fehlertyp-Clustering-Models auf Basis der extrahierten Einbettungsvektoren zum Clustern der als fehlerhaft erkannten Proben in mehrere Fehlertyp-Klassen; und
- Bereitstellen des trainierten GAMs und/oder des trainierten Fehlertyp-Clustering-Models.

Die für das Verfahren gemachten Ausführungen gelten für die Vorrichtung entsprechend. Dabei versteht es sich, dass sprachliche Abwandlungen von verfahrensmäßig formulierten Merkmalen nach sprachüblicher Praxis für die Vorrichtung umformulierbar sind, ohne dass derartige Formulierungen explizit hier aufgeführt werden müssen.

Das vorliegende Verfahren nutzt OK/nicht-OK-Label bzw. Klassifizierungen, die durch ein GAM erzeugt werden, um eine Einbettung der Probendaten zu erlernen, die die Wichtigkeit der verschiedenen Probenmerkmale widerspiegelt. Dies wird vorliegend erreicht, indem ein zweistufiger Prozess eingeführt wird, der einen Qualitätsoptimierungsprozess widerspiegelt, wie er durch menschliche Experten durchgeführt wird. Für ein nicht-OK-Muster in Probenmerkmalen wird dabei analysiert, warum die betreffende Probe als "nicht OK" klassifiziert wurden, also beispielsweise ein die Probe betreffendes Bauteil nicht funktioniert, fehlerhaft ist und/oder nur unzureichend gewisse Qualitätsstandards erfüllt. Ausgangspunkt ist vorzugsweise ein tabellarischer Datensatz, bei dem beispielsweise jede Zeile oder Spalte einer Probe/Instanz (z.B. einem produzierten Bauteil) entspricht und die Spalten oder Zeile die verschiedenen Probenmerkmale beschreiben.

Dabei wird vorliegend ein aus als Glasbox-Model bekanntes verallgemeinertes additives Modell, ein GAM, eingesetzt, um damit einen "OK/nicht OK"-Klassifikator für die Probenanalyse zu trainieren. Besonders bevorzugt wird als GAM eine Explainable Boosting Machine (EBM) verwendet. Anschließend kann das trainierte GAM verwendet werden, um zu analysieren, warum eine "nicht OK"-Probe als solche erkannt wurde. Dabei wird vorzugsweise als Annahme getroffen, dass verschiedene Probenmerkmale für verschiedene Fehlertypen verantwortlich sind. Das GAM zeigt dann vorzugsweise, für jede Probe, in welchem Umfang jedes Probenmerkmal zum Klassifizierungsergebnis beigetragen hat. In einer zweiten Stufe werden dann diese Beiträge als Einbettung in Form der Einbettungsvektoren verwendet, um das Fehlertyp-Clustering-Model, beispielsweise einen Clustering-Algorithmus, in dem durch die Einbettungsvektoren gebildeten Einbettungsraum zu trainieren. Für eine Fein-Klassifizierung der Proben wird dann also durch das Fehlertyp-Clustering-Model nach der Ermittlung eines OK/nicht OK Status vorgenommen.

Ein Vorteil dieses Vorgehens besteht darin, dass das Fehlertyp-Clustering-Model durch die oben beschriebene Einbettung der Daten unwichtige Probenmerkmale zumindest implizit ignorieren kann und vorzugsweise nur Unterschiede bei wichtigen Probenmerkmalen höher gewichtet. Ferner entstehen durch das vorliegende Verfahren keine Kosten für die Kennzeichnung bzw. das Labeln der nicht OK-Proben in verschiedenen Fehlerklassen / Fehlertypen, was ursprünglich manuell durch Experten erfolgen musste.

Das vorliegende Verfahren wird vorzugsweise in Produktionsumgebungen eingesetzt, in denen vorzugsweise für jeden Fertigungsprozess und/oder in jedem Fertigungsschritt Probenmerkmale, die auch Prüfmerkmale oder Fertigungsprozessparameter umfassen können, von Proben, beispielsweise von produzierten Bauteilen, erfasst werden. Die Fertigungsmaschinen haben dabei vorzugsweise zumeist regelbasierte Ansätze, um Proben als OK oder nicht OK zu klassifizieren. Durch das vorliegende Verfahren ist es nun möglich, zu verstehen, warum gewissen Proben als nicht OK erkannt wurden. So kann die Produktion/Fertigung verbessert und eine Anzahl der fehlerhaften Proben reduziert werden. Dies ist insbesondere möglich, da durch das vorliegende Verfahren ermittelbar ist, warum Proben als fehlerhaft erkannt wurden. Zudem können die Fehler in verschiedene Fehlertypen gruppiert werden.

Während oder nachdem das Glasbox-Modell trainiert wird, können die Zwischenergebnisse des Verfahrens vorzugsweise auch als Stand-Alone-Algorithmus zur Erkennung von Anomalien bzw. zur Klassifizierung von "OK und nicht OK"-Proben verwendet werden. Dabei kann ein solcher Algorithmus zur Erkennung von Anomalien nach Überführung in den Merkmals-Einbettungsraum besser funktionieren als dies auf Basis der Originaldaten möglich ist.

In einem weiteren Aspekt ist vorgeschlagen, dass das Erkennen der fehlerhaften Proben in dem Datensatz auf Basis von mindestens einem der mehreren Probenmerkmale ein Klassifizieren der jeweiligen Proben in "OK"-Proben und "nicht OK"-Proben aufweist.

Die OK/nicht OK Klassifizierung, insbesondere pro Probenmerkmal, erfolgt vorzugsweise auf Basis eines entsprechenden OK/nicht Ok Labels. Dies kann beispielsweise ein Vergleich mit einem Grenzwertkriterium oder ähnliches sein.

In einem weiteren Aspekt ist vorgeschlagen, dass der Datensatz auf Basis von Zeitreihendaten bereitgestellt wird, wobei durch mindestens einen Datenvorverarbeitungsschritt die Probenmerkmale aus den Zeitreihendaten extrahiert werden.

Grundsätzlich kann vorliegend jeder Datentyp oder Probentyp analysiert werden, der sich in einer tabellarischen Form darstellen lässt, in der einzelnen Proben, einzelne Probenmerkmale zugewiesen sind. Handelt es sich bei den Ausgangsdaten um, insbesondere wiederholbare, Zeitreihen, z.B. Zeitreihen, die eine, während eines Pressvorgangs aufgebrachte Kraft angeben, ist eine Datenvorverarbeitung bevorzugt, durch welche die Zeitreihendaten in tabellarische Form überführt werden können. Dabei kann ein Vorverarbeitungsschritt darin bestehen, Merkmale aus jeder Zeitreihe zu extrahieren, die als Probenmerkmale in der Tabelle angegeben werden. Nach dieser Vorverarbeitung liegen die Informationen der Zeitreihe in einem tabellarischen Format vor, so dass der zuvor beschriebe zweistufige Analyseansatz verwendet werden kann. Auch Zeitreihendaten anderer Sensortypen, wie beispielsweise Sensordaten von Drehmoment, Druck, Temperatur, Winkel und/oder Beschleunigung, sind denkbar. Die Merkmale von Zeitreihen können beispielsweise mit Paketen, wie tsfresh extrahiert werden.

Eine ähnliche Datenvorverarbeitung kann für Bilddaten oder Audiodaten oder auch Textdaten vorgenommen werden. Aus Bilddaten können beispielsweise mittels eines CNNs (Convolutional Neural Networks) Bildmerkmale extrahiert und zu einer in dem Bild erkannten Probe in Form von Probenmerkmalen in tabellarischer Form abgebildet werden. Eine Ähnliche Datenvorverarbeitung ist auch für Audiodaten möglich. Textdaten können beispielsweise durch ein Large Language Model vorverarbeitet werden, um Textmerkmale zu einer Textprobe zu extrahieren, und diese zusammen mit der Probe in tabellarische Form zu überführen.

Auch weitere Datentypen, die mittels Datenvorverarbeitung in ein tabellarisches Format überführbar sind, in dem jeder Probe mehrere Probenmerkmale zugewiesen sind, können mittels des vorliegenden Verfahrens verarbeitet werden.

In einem weiteren Aspekt ist vorgeschlagen, dass eine Anzahl von in dem jeweiligen Einbettungsvektor eingebetteten Merkmalen durch Abgleichen mit einem jeweils merkmalsspezifischen Grenzwert und/oder durch Anwenden eines Merkmalsreduktionsalgorithmus, insbesondere einer PCA, reduzierbar ist.

Um unwichtige Probenmerkmale zu reduzieren, d.h. aufzufinden, für welche Probenmerkmale ein Betrag |*fᵢ*(*xᵢ*)|des betreffenden Einbettungsvektors über alle oder eine Teilmenge von Proben unterhalb oder oberhalb eines bestimmten Grenzwertes liegt, kann ein Reduktionsalgorithmus wie PCA verwendet werden. PCA steht für "Principal Component Analysis", auf Deutsch "Hauptkomponentenanalyse". Es ist eine statistische Technik, die verwendet wird, um die Datenstruktur zu vereinfachen, indem die Dimensionen des Datensatzes reduziert werden. Dabei werden die wichtigsten Informationen (Hauptkomponenten) ermittelt, die die größte Varianz in den Daten erklären, während die weniger wichtigen Informationen, die als Rauschen betrachtet werden können, entfernt werden. Dies wird oft in der Datenanalyse und -visualisierung eingesetzt, um Muster in großen Datensätzen zu erkennen oder um Daten vor der Anwendung komplexer maschineller Lernmodelle vorzubereiten.

In einem weiteren Aspekt ist vorgeschlagen, dass die Proben Bauteile eines Fertigungsprozesses der Fertigungsumgebung oder hierarchisch klassifizierbare Labels oder, insbesondere durch einen Sensor erfasste, Zeitreihendaten aufweisen.

Das Verfahren kann ferner verwendet werden, um bessere Clustering-Ergebnisse für diverse Fehlertypen zu erzielen. Der vorgeschlagene Fehlertyp-Clustering-Ansatz ist dabei insbesondere auch hilfreich, um andere Arten von unüberwachten Clustering-Aufgaben zu lösen, beispielsweise wenn hierarchisch strukturierte Labels vorliegen, die sich in OKj nicht OK-Labels einordnen, wobei sich die nicht OK Labels wiederum in mehrere, also mindestens zwei, Untergruppen unterteilen lassen. Dabei können die vorhandenen Labels höherer Ordnung verwendet werden, um Informationen über die Wichtigkeit der Proben- bzw. Labelmerkmale zu extrahieren. Auf Basis der Proben- bzw. Labelmerkmale kann dann ein nachgelagertes Clustering in die "nicht OK"-Label-Untergruppen erfolgen.

In einem weiteren Aspekt wird vorgeschlagen ein Verfahren, insbesondere ein Inferenzverfahren, zum Erkennen von fehlerhaften Proben in einer Fertigungsumgebung und/oder zum Clustern der als fehlerhaft erkannten Proben in mehrere Fehlertyp-Klassen, das Verfahren aufweisend:
- Bereitstellen eines Fertigungsdatensatzes, aufweisend mehrere Fertigungsproben, denen jeweils mehrere Probenmerkmale zugewiesen sind;
- Erkennen der fehlerhaften Proben in dem Fertigungsdatensatz auf Basis von mindestens einem der mehreren Probenmerkmale durch ein, insbesondere gemäß den vorliegenden Verfahren nach einem seiner Aspekte, trainiertes GAM; und
- Clustern der als fehlerhaft erkannten Proben in mehrere Fehlertyp-Klassen durch ein, insbesondere gemäß den vorliegenden Verfahren nach einem seiner Aspekte, trainiertes Fehlertyp-Clustering-Model.

Es sei erwähnt, dass das vorliegende Inferenzverfahren also vorzugsweise auf ein GAM und auf ein Fehlertyp-Clustering-Model zurückgreift, das jeweils gemäß dem ersten Aspekt, oder einem seiner weiteren Aspekte trainiert wurde. Das Inferenzverfahren kann damit auch als von dem Verfahren gemäß dem ersten Aspekt (oder einem seiner weiteren Aspekte) abhängiges Verfahren angesehen werden.

Besonders bevorzugt werden die nach dem vorliegenden Verfahren trainierten Modelle einzeln oder in Kombination für die Identifizierung und/oder (Nach-) Verfolgung verschiedener Fehler(-typen) in der Produktion und/oder Fertigung von Bauteilen und/oder in der Qualitätssicherung von sonstigen Proben eingesetzt. So können verschiedene Fehler identifiziert werden.

In einem weiteren Aspekt ist vorgeschlagen, dass das Verfahren ferner ein Ermitteln mindestens eines Fertigungsparameters und/oder mindestens einer Fertigungsprozesseinstellung mindestens eines Fertigungsprozesses in der Fertigungsumgebung zu den geclusterten Fehlertyp-Klassen, und Optimieren des Fertigungsparameters und/oder der Fertigungsprozesseinstellung auf Basis der geclusterten Fehlertyp-Klassen aufweist.

Ein Produktionsteam kann beispielsweise versuchen, diese identifizierten Fehler und/oder die den jeweiligen Fehlertypen zugrundeliegende Probleme der Produktion, beispielsweise durch die Änderung von Fertigungs- bzw. Produktionsparametern und/oder sonstigen Einstellungen der Produktion, zu beheben. Dabei kann sich das Produktionsteam beispielsweise auf die am häufigsten vorkommenden Fehlertypen konzentrieren, so dass der Fehleranalyse und Fehlerbehebungsprozess effizienter werden

In einem weiteren Aspekt ist auch ein Steuergerät vorgeschlagen, das in einem Robotiksystem und/oder einer industriellen Maschine umfasst ist, und auf dem das vorliegende Verfahren in einem seiner Aspekte ausführbar ist.

In einem weiteren Aspekt ist ein Computerprogramm mit Programmcode beansprucht, um zumindest Teile des vorliegenden Verfahrens in einem seiner Aspekte auszuführen, wenn das Computerprogramm auf einem Computer ausgeführt wird. Mit anderen Worten wird ein Computerprogramm(-produkt), umfassend Befehle, die bei der Ausführung des Programms durch einen Computer diesen veranlassen, das Verfahren/die Schritte des Verfahrens in einem seiner Aspekte auszuführen.

In einem weiteren Aspekt ist ein computerlesbarer Datenträger mit Programmcode eines Computerprogramms vorgeschlagen, um zumindest Teile des vorliegenden Verfahrens in einem seiner Aspekte auszuführen, wenn das Computerprogramm auf einem Computer ausgeführt wird. Mit anderen Worten betrifft die Erfindung ein computerlesbares (Speicher-) Medium, umfassend Befehle, die bei der Ausführung durch einen Computer diesen veranlassen, das Verfahren/die Schritte des Verfahrens in einem seiner Aspekte auszuführen.

Die beschriebenen Ausgestaltungen und Weiterbildungen lassen sich beliebig miteinander kombinieren.

Weitere mögliche Ausgestaltungen, Weiterbildungen und Implementierungen der Erfindung umfassen auch nicht explizit genannte Kombinationen von zuvor oder im Folgenden bezüglich der Ausführungsbeispiele beschriebenen Merkmalen der Erfindung.

### Kurze Beschreibung der Zeichnungen

Die beiliegenden Zeichnungen sollen ein weiteres Verständnis der Ausführungsformen der Erfindung vermitteln. Sie veranschaulichen Ausführungsformen und dienen im Zusammenhang mit der Beschreibung der Erklärung von Prinzipien und Konzepten der Erfindung.

Andere Ausführungsformen und viele der genannten Vorteile ergeben sich im Hinblick auf die Zeichnungen. Die dargestellten Elemente der Zeichnungen sind nicht notwendigerweise maßstabsgetreu zueinander gezeigt.

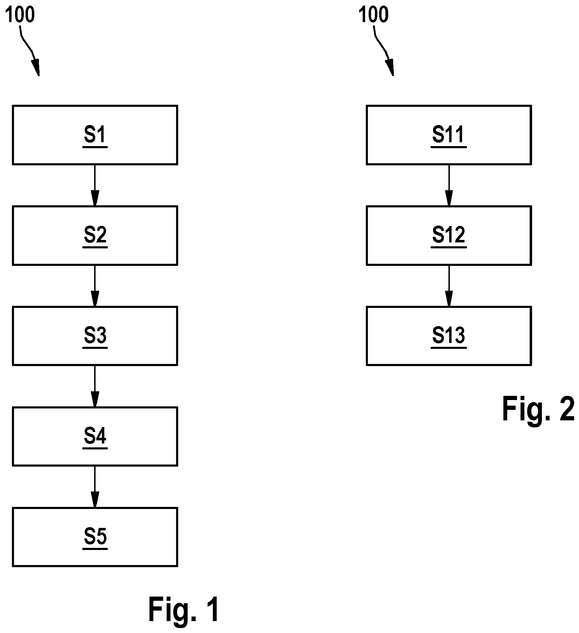

- Fig. 1: zeigt ein schematisches Flussdiagramm des Verfahrens in einem seiner Aspekte.

In den Figuren der Zeichnungen bezeichnen gleiche Bezugszeichen gleiche oder funktionsgleiche Elemente, Bauteile oder Komponenten, soweit nichts Gegenteiliges angegeben ist.

Fig. 1 zeigt ein schematisches Flussdiagramm eines Verfahrens zum Trainieren eines verallgemeinerten, additiven Models, GAMs, zum Erkennen von fehlerhaften Proben in einer Fertigungsumgebung und zum Trainieren eines Fehlertyp-Clustering-Models auf Basis der fehlerhaften Proben.

Das Verfahren kann in einer beliebigen Ausführungsform zumindest teilweise durch eine Vorrichtung 100 ausgeführt werden, die hierzu mehrere nicht näher dargestellte Komponenten, beispielsweise eine oder mehrere Bereitstellungseinrichtungen und/oder mindestens eine Auswerte- und Recheneinrichtung umfassen kann. Es versteht sich, dass die Bereitstellungseinrichtung gemeinsam mit der Auswerte- und Recheneinrichtung ausgebildet sein kann, oder von dieser unterschiedlich sein kann. Ferner kann die Vorrichtung 100, die ein Teil eines Systems sein kann, eine Speichereinrichtung und/oder eine Ausgabeeinrichtung und/oder eine Anzeigeeinrichtung und/oder eine Eingabeeinrichtung umfassen.

Das computerimplementierte Verfahren umfasst mindestens die folgenden Schritte:
In einem Schritt S1 erfolgt ein Bereitstellen eines, insbesondere tabellarischen, Datensatzes, aufweisend mehrere Proben, denen jeweils mehrere Probenmerkmale zugewiesen sind. Die Proben repräsentieren beispielsweise Bauteile eines Fertigungsprozesses der Fertigungsumgebung oder hierarchisch klassifizierbare Labels oder, insbesondere durch einen Sensor erfasste, Zeitreihendaten auf

In einem Schritt S2 erfolgt ein Trainieren des GAMs, insbesondere einer Explainable Boosting Machine, zum Erkennen der fehlerhaften Proben in dem Datensatz auf Basis von mindestens einem der mehreren Probenmerkmale. Das Erkennen der fehlerhaften Proben in dem Datensatz auf Basis von mindestens einem der mehreren Probenmerkmale weist vorzugsweise ein Klassifizieren der jeweiligen Proben in "OK"-Proben und "nicht OK"-Proben auf.

In einem Schritt S3 erfolgt ein Extrainieren von jeweiligen Einbettungsvektoren zumindest für die als fehlerhaft erkannten Proben, die Einbettungsvektoren vorzugsweise jeweils aufweisend die der jeweiligen fehlerhaft erkannten Probe zugeordneten Probenmerkmale. Eine Anzahl von in dem jeweiligen Einbettungsvektor eingebetteten Merkmalen ist vorzugsweise durch Abgleichen mit einem jeweils merkmalsspezifischen Grenzwert und/oder durch Anwenden eines Merkmalsreduktionsalgorithmus, insbesondere einer PCA, reduzierbar. Die Einbettungen können auch über Kontributionen verwendet werden, um einen unüberwachten Clustering-Algorithmus zu trainieren, um verschiedene Fehlerklassen zu clustern.

Dabei wird vorzugsweise der tabellarisch vorliegende Vektor (*x*₁, ... , *xₙ*) pro Probe in einen jeweiligen Einbettungsvektor (*f*₁(*x*₁), ... , *f*ₙ(*xₙ*)) überführt.

In einem Schritt S4 erfolgt ein Trainieren des, insbesondere unüberwacht lernenden, Fehlertyp-Clustering-Models auf Basis der extrahierten Einbettungsvektoren zum Clustern der als fehlerhaft erkannten Proben in mehrere Fehlertyp-Klassen.

In einem Schritt S5 erfolgt ein Bereitstellen des trainierten GAMs und/oder des trainierten Fehlertyp-Clustering-Models für die Inferenz in einer Fertigungsumgebung.

Fig. 2 zeigt ein schematisches Flussdiagramm eines Verfahrens zum Erkennen von fehlerhaften Proben in einer Fertigungsumgebung und/oder zum Clustern der als fehlerhaft erkannten Proben in mehrere Fehlertyp-Klassen.

Das computerimplementierte Verfahren umfasst mindestens die folgenden Schritte:
In einem Schritt S11 erfolgt ein Bereitstellen eines Fertigungsdatensatzes, aufweisend mehrere Fertigungsproben, denen jeweils mehrere Probenmerkmale zugewiesen sind.

In einem Schritt S12 erfolgt ein Erkennen der fehlerhaften Proben in dem Fertigungsdatensatz auf Basis von mindestens einem der mehreren Probenmerkmale durch ein trainiertes GAM.

In einem Schritt S13 erfolgt ein Clustern der als fehlerhaft erkannten Proben in mehrere Fehlertyp-Klassen durch ein trainiertes Fehlertyp-Clustering-Model.

Das Verfahren zum Erkennen von fehlerhaften Proben in einer Fertigungsumgebung und/oder zum Clustern der als fehlerhaft erkannten Proben in mehrere Fehlertyp-Klassen kann durch die Vorrichtung 100 ausführbar sein, oder auch auf einem Steuergerät eines Roboters oder einer sonstigen Fertigungsmaschine ausführbar sein.

## Patentansprüche

1. Verfahren zum Trainieren eines verallgemeinerten, additiven Models, GAMs, zum Erkennen von fehlerhaften Proben in einer Fertigungsumgebung und zum Trainieren eines Fehlertyp-Clustering-Models auf Basis der fehlerhaften Proben,
das Verfahren aufweisend die Schritte:
- Bereitstellen (S1) eines, insbesondere tabellarischen, Datensatzes, aufweisend mehrere Proben, denen jeweils mehrere Probenmerkmale zugewiesen sind;
- Trainieren (S2) des GAMs, insbesondere einer Explainable Boosting Machine, zum Erkennen der fehlerhaften Proben in dem Datensatz auf Basis von mindestens einem der mehreren Probenmerkmale;
- Extrainieren (S3) von jeweiligen Einbettungsvektoren zumindest für die als fehlerhaft erkannten Proben, die Einbettungsvektoren vorzugsweise jeweils aufweisend die der jeweiligen fehlerhaft erkannten Probe zugeordneten Probenmerkmale;
- Trainieren (S4) des, insbesondere unüberwacht lernenden, Fehlertyp-Clustering-Models auf Basis der extrahierten Einbettungsvektoren zum Clustern der als fehlerhaft erkannten Proben in mehrere Fehlertyp-Klassen; und
- Bereitstellen (S5) des trainierten GAMs und/oder des trainierten Fehlertyp-Clustering-Models.

2. Verfahren nach Anspruch 1, wobei das Erkennen der fehlerhaften Proben in dem Datensatz auf Basis von mindestens einem der mehreren Probenmerkmale ein Klassifizieren der jeweiligen Proben in "OK"-Proben und "nicht OK"-Proben aufweist.

3. Verfahren nach Anspruch 1 oder 2, wobei der Datensatz auf Basis von Zeitreihendaten bereitgestellt wird, wobei durch mindestens einen Datenvorverarbeitungsschritt die Probenmerkmale aus den Zeitreihendaten extrahiert werden.

4. Verfahren nach einem der vorstehenden Ansprüche, wobei eine Anzahl von in dem jeweiligen Einbettungsvektor eingebetteten Merkmalen durch Abgleichen mit einem jeweils merkmalsspezifischen Grenzwert und/oder durch Anwenden eines Merkmalsreduktionsalgorithmus, insbesondere einer PCA, reduzierbar ist.

5. Verfahren nach einem der vorstehenden Ansprüche, wobei die Proben Bauteile eines Fertigungsprozesses der Fertigungsumgebung oder hierarchisch klassifizierbare Labels oder, insbesondere durch einen Sensor erfasste, Zeitreihendaten aufweisen.

6. Verfahren zum Erkennen von fehlerhaften Proben in einer Fertigungsumgebung und/oder zum Clustern der als fehlerhaft erkannten Proben in mehrere Fehlertyp-Klassen, das Verfahren aufweisend:
- Bereitstellen (S11) eines Fertigungsdatensatzes, aufweisend mehrere Fertigungsproben, denen jeweils mehrere Probenmerkmale zugewiesen sind;
- Erkennen (S12) der fehlerhaften Proben in dem Fertigungsdatensatz auf Basis von mindestens einem der mehreren Probenmerkmale durch ein trainiertes GAM; und
- Clustern (13) der als fehlerhaft erkannten Proben in mehrere Fehlertyp-Klassen durch ein trainiertes Fehlertyp-Clustering-Model.

7. Verfahren nach Anspruch 6, ferner aufweisend, ein Ermitteln mindestens eines Fertigungsparameters und/oder mindestens einer Fertigungsprozesseinstellung mindestens eines Fertigungsprozesses in der Fertigungsumgebung zu den geclusterten Fehlertyp-Klassen, und Optimieren des Fertigungsparameters und/oder der Fertigungsprozesseinstellung auf Basis der geclusterten Fehlertyp-Klassen.

8. Computerprogramm mit Programmcode, um zumindest Teile eines Verfahrens nach einem der Ansprüche 1 bis 7 auszuführen, wenn das Computerprogramm auf einem Computer ausgeführt wird.

9. Computerlesbarer Datenträger mit Programmcode eines Computerprogramms, um zumindest Teile eines Verfahrens nach einem der Ansprüche 1 bis 7 auszuführen, wenn das Computerprogramm auf einem Computer ausgeführt wird.

10. Vorrichtung (100) zum Trainieren eines verallgemeinerten, additiven Models, GAMs, zum Erkennen von fehlerhaften Proben in einer Fertigungsumgebung und zum Trainieren eines Fehlertyp-Clustering-Models auf Basis der fehlerhaften Proben, wobei die Vorrichtung (100) eine Auswerte- und Recheneinrichtung aufweist, die dazu ausgebildet ist, die folgenden Schritte auszuführen:
- Bereitstellen eines, insbesondere tabellarischen, Datensatzes, aufweisend mehrere Proben, denen jeweils mehrere Probenmerkmale zugewiesen sind;
- Trainieren des GAMs, insbesondere einer Explainable Boosting Machine, zum Erkennen der fehlerhaften Proben in dem Datensatz auf Basis von mindestens einem der mehreren Probenmerkmale;
- Extrainieren von jeweiligen Einbettungsvektoren zumindest für die als fehlerhaft erkannten Proben, die Einbettungsvektoren vorzugsweise jeweils aufweisend die der jeweiligen fehlerhaft erkannten Probe zugeordneten Probenmerkmale;
- Trainieren des, insbesondere unüberwacht lernenden, Fehlertyp-Clustering-Models auf Basis der extrahierten Einbettungsvektoren zum Clustern der als fehlerhaft erkannten Proben in mehrere Fehlertyp-Klassen; und
- Bereitstellen des trainierten GAMs und/oder des trainierten Fehlertyp-Clustering-Models.

## Geänderte Patentansprüche

### Geänderte Patentansprüche gemäss Regel 137(2) EPÜ.

1. Verfahren zum Trainieren eines verallgemeinerten, additiven Models, GAMs, zum Erkennen von fehlerhaften Proben in einer Fertigungsumgebung und zum Trainieren eines Fehlertyp-Clustering-Models auf Basis der fehlerhaften Proben,
das Verfahren aufweisend die Schritte:
- Bereitstellen (S1) eines, insbesondere tabellarischen, Datensatzes, aufweisend mehrere Proben, denen jeweils mehrere Probenmerkmale zugewiesen sind;
- Trainieren (S2) des GAMs, insbesondere einer Explainable Boosting Machine, zum Erkennen der fehlerhaften Proben in dem Datensatz auf Basis von mindestens einem der mehreren Probenmerkmale;
- Extrainieren (S3) von jeweiligen Einbettungsvektoren zumindest für die als fehlerhaft erkannten Proben, die Einbettungsvektoren vorzugsweise jeweils aufweisend die der jeweiligen fehlerhaft erkannten Probe zugeordneten Probenmerkmale;
- Trainieren (S4) des, insbesondere unüberwacht lernenden, Fehlertyp-Clustering-Models auf Basis der extrahierten Einbettungsvektoren zum Clustern der als fehlerhaft erkannten Proben in mehrere Fehlertyp-Klassen; und
- Bereitstellen (S5) des trainierten GAMs und/oder des trainierten Fehlertyp-Clustering-Models.

2. Verfahren nach Anspruch 1, wobei das Erkennen der fehlerhaften Proben in dem Datensatz auf Basis von mindestens einem der mehreren Probenmerkmale ein Klassifizieren der jeweiligen Proben in "OK"-Proben und "nicht OK"-Proben aufweist.

3. Verfahren nach Anspruch 1 oder 2, wobei der Datensatz auf Basis von Zeitreihendaten bereitgestellt wird, wobei durch mindestens einen Datenvorverarbeitungsschritt die Probenmerkmale aus den Zeitreihendaten extrahiert werden.

4. Verfahren nach einem der vorstehenden Ansprüche, wobei eine Anzahl von in dem jeweiligen Einbettungsvektor eingebetteten Merkmalen durch Abgleichen mit einem jeweils merkmalsspezifischen Grenzwert und/oder durch Anwenden eines Merkmalsreduktionsalgorithmus, insbesondere einer PCA, reduzierbar ist.

5. Verfahren nach einem der vorstehenden Ansprüche, wobei die Proben Bauteile eines Fertigungsprozesses der Fertigungsumgebung oder hierarchisch klassifizierbare Labels oder, insbesondere durch einen Sensor erfasste, Zeitreihendaten aufweisen.

6. Verfahren zum Erkennen von fehlerhaften Proben in einer Fertigungsumgebung und/oder zum Clustern der als fehlerhaft erkannten Proben in mehrere Fehlertyp-Klassen, das Verfahren aufweisend:
- Bereitstellen (S11) eines Fertigungsdatensatzes, aufweisend mehrere Fertigungsproben, denen jeweils mehrere Probenmerkmale zugewiesen sind;
- Erkennen (S12) der fehlerhaften Proben in dem Fertigungsdatensatz auf Basis von mindestens einem der mehreren Probenmerkmale durch ein trainiertes GAM; und
- Clustern (13) der als fehlerhaft erkannten Proben in mehrere Fehlertyp-Klassen durch ein nach einem der Ansprüche 1 bis 5 trainiertes Fehlertyp-Clustering-Model.

7. Verfahren nach Anspruch 6, ferner aufweisend, ein Ermitteln mindestens eines Fertigungsparameters und/oder mindestens einer Fertigungsprozesseinstellung mindestens eines Fertigungsprozesses in der Fertigungsumgebung zu den geclusterten Fehlertyp-Klassen, und Optimieren des Fertigungsparameters und/oder der Fertigungsprozesseinstellung auf Basis der geclusterten Fehlertyp-Klassen.

8. Computerprogramm mit Programmcode, um zumindest Teile eines Verfahrens nach einem der Ansprüche 1 bis 7 auszuführen, wenn das Computerprogramm auf einem Computer ausgeführt wird.

9. Computerlesbarer Datenträger mit Programmcode eines Computerprogramms, um zumindest Teile eines Verfahrens nach einem der Ansprüche 1 bis 7 auszuführen, wenn das Computerprogramm auf einem Computer ausgeführt wird.

10. Vorrichtung (100) zum Trainieren eines verallgemeinerten, additiven Models, GAMs, zum Erkennen von fehlerhaften Proben in einer Fertigungsumgebung und zum Trainieren eines Fehlertyp-Clustering-Models auf Basis der fehlerhaften Proben, wobei die Vorrichtung (100) eine Auswerte- und Recheneinrichtung aufweist, die dazu ausgebildet ist, die folgenden Schritte auszuführen:
- Bereitstellen eines, insbesondere tabellarischen, Datensatzes, aufweisend mehrere Proben, denen jeweils mehrere Probenmerkmale zugewiesen sind;
- Trainieren des GAMs, insbesondere einer Explainable Boosting Machine, zum Erkennen der fehlerhaften Proben in dem Datensatz auf Basis von mindestens einem der mehreren Probenmerkmale;
- Extrainieren von jeweiligen Einbettungsvektoren zumindest für die als fehlerhaft erkannten Proben, die Einbettungsvektoren vorzugsweise jeweils aufweisend die der jeweiligen fehlerhaft erkannten Probe zugeordneten Probenmerkmale;
- Trainieren des, insbesondere unüberwacht lernenden, Fehlertyp-Clustering-Models auf Basis der extrahierten Einbettungsvektoren zum Clustern der als fehlerhaft erkannten Proben in mehrere Fehlertyp-Klassen; und
- Bereitstellen des trainierten GAMs und/oder des trainierten Fehlertyp-Clustering-Models.
